Europäisches Patentamt

European Patent Office

Office européen des brevets

(19)

(11) Veröffentlichungsnummer: **0 191 164**
**B1**

(12) **EUROPÄISCHE PATENTSCHRIFT**

(45) Veröffentlichungstag der Patentschrift: 06.06.90

(21) Anmeldenummer: 85115350.2

(22) Anmeldetag: 03.12.85

(51) Int. Cl.⁵: $C\ 08\ L\ 67/02$ // (C08L67/02, 57:00)

(54) Formmassen auf Basis von linearen, hochmolekularen Polyestern.

(30) Priorität: 14.02.85 DE 3504986

(43) Veröffentlichungstag der Anmeldung:
20.08.86 Patentblatt 86/34

(45) Bekanntmachung des Hinweises auf die
Patenterteilung:
06.06.90 Patentblatt 90/23

(84) Benannte Vertragsstaaten:
BE CH DE FR GB IT LI NL

(56) Entgegenhaltungen:
EP-A-0 056 243
EP-A-0 125 483
EP-A-0 175 161

Die Akte enthält technische Angaben, die nach
dem Eingang der Anmeldung eingereicht
wurden und die nicht in dieser Patentschrift
enthalten sind.

(73) Patentinhaber: HÜLS AKTIENGESELLSCHAFT
Patentabteilung / PB 15 - Postfach 13 20
D-4370 Marl 1 (DE)

(72) Erfinder: Dröscher, Michael, Dr.
Hetkerbruch 34
D-4270 Dorsten 11 (DE)
Erfinder: Gerth, Christian, Dr.
In der Thiebrei 80
D-4358 Haltern (DE)
Erfinder: Sturm, Harald, Dr.
Kaspar-Grove-Strasse 48
D-4370 Marl 1 (DE)

Courier Press, Leamington Spa, England.

**Beschreibung**

Gegenstand der Erfindung sind Formmassen auf der Basis eines linearen, hochmolekularen Polyesters, dem ein weiterer, als wäßriger Latex vorliegender Kunststoff zugemischt wird.

Es ist seit langem Stand der Technik, die Eigenschaften eines Thermoplasten durch inniges Zumischen eines weiteren Polymeren zu verändern und zu verbessern (DE—PS 12 60 135). So beschreibt die DE—OS 26 22 876 Formmassen auf der Basis eines Polyesters, dem 1 bis 40 Teile eines Copolymeren zugemischt werden. Die Mischung der Komponenten erfolgt im geschlossenen System.

Diese Art der Einmischung ermöglicht nur den Einsatz von Copolymeren, die in fester Phase als Pulver, Granulat oder Krümel in das Mischaggregat ingebracht werden können. Copolymere, deren Erweichungspunkt unterhalb der Raumtemperatur liegt, können nach diesem Verfahren nicht in den Polyester eingearbeitet werden.

Solche Copolymere werden in der Regel als wäßrige Latices hergestellt. Es ist nun bekannt, Latices direkt in Thermoplaste einzuarbeiten, indem der Latex dem aufgeschmolzenen Thermoplasten zugemischt wird (Adv. Polym. Techn. *3* (1983), S. 41 ff; US—PS 3 742 093). Als Thermoplasten werden ausschließlich Polymere genannt, welche durch Polymerisation erhalten werden. Harze, die durch Polykondensation erhalten werden, sind nicht aufgeführt.

In EP—A—125 483 wird die Schlagzähmodifizierung von Polyamiden beschrieben. Die Modifizierungskomponente kann als Latex direkt in das geschmolzene Polyamid eingemischt werden. Dieses Verfahren ist deshalb ohne weiteres möglich, weil Polyamide eine um eine Größenordnung höhere Hydrolysebeständigkeit aufweisen als Polyester.

Aus EP—PS 56 123 ist es bakannt, in gesättigte Polyester Pfropfmischpolymerisate einzuarbeiten, die Wasser enthalten. Der Wassergehalt ist jedoch auf höchstens 50 Gew.-% beschränkt. Da Latices deutlich mehr als 50 Gew.-% Wasser enthälten, müssen diese für das beanspruchte Verfahren aufbereitet bzw. entwässert werden. Die Aufbereitung der Latices geschieht durch Ausfällen des Polymerisates sowie teilweiser Entfernung des Wassers mit Hilfe mechanischer Methoden. Wesentlicher Nachteil dieses bekannten Verfahrens ist es, den Latex aufarbeiten zu müssen, anstelle ihn unvorbehandlet, direkt einzusetzen.

Aufgabe der Erfindung war es, die geschilderten Nachteile des Standes der Technik zu vermeiden. Es sollte eine Möglichkeit erarbeitet werden, welche den unmittelbaren Einsatz eines hochwasserhaltigen Latex als Modifizierungsmittel für Polyester ermöglicht.

Diese Aufgabe wurde erfüllt durch Formmassen auf der Basis eines linearen, hochmolekularen Polyesters mit einer Viskositätszahl im Bereich von 50 bis 250 cm$^3$/g, dem bei Temperaturen im Bereich von 150 bis 300°C, unter einem Druck von 1 bis 100 bar und unter Einwirkung von starken Scherkräften mindestens ein weiterer, als wäßriger Latex vorliegender Kunststoff auf der Basis von α-Olefinen, konjugierten bzw. nicht konjugierten Dienen, Styrol, Acrylnitril, Vinylchlorid, Vinylacetat, Vinylidenfluorid, aliphatischen Estern der (Meth)acrylsäure mit 1 bis 20 C-Atomen in der Alkoholkomponente zugemischt wird, wobei der Latex einen Feststoffgehalt von <50 Gew.-% besitzt und daß der in dem Latex vorliegende Kunststoff ein Homo-, Co- oder ein Blockcopolymerisat mit einer Glasübergangstemperatur von ≤0°C oder ein Polymerisat von Kern-Schale-Typ ist, wobei die zum Aufbau der Schale eingesetzten Monomeren für sich polymerisiert gleichfalls eine Glasübergangstemperatur von ≤0°C aufweisen, und daß der in dem Latex vorliegende Kunststoff 0,1 bis 20 Mol-%—bezogen auf den Kunststoff—Carboxyl-, Amid-, Epoxi-, Amino- oder Hydroxylgruppen aufweist.

Als Kunststoffe enthalten die wäßrigen Latices Homopolymerisate, Copolymerisate oder Blockcopolymerisate, die auch vom Kern/Schale-Typ sein können. Ihre Herstellung ist bekannte (DE—PS 12 60 135, DE—AS 26 22 973, DE—OS 26 22 876, DE—OS 32 45 292, WP 82 03 222; Houben-Weyl, Methoden der organischen Chemie, Band XII.1 (1961), Seite 133 bis 406; F. Höscher, "Dispersionen synth. Hochpolymerer" I, Springer, Berlin, 1969; Encyclopedia of Polym. Sci. Technology, Vol. 8, 164—195, Interscience Publishers, N. Y., 1968; Poelein, G. W. et al, "Science and Technology of Polymer Colloids", Vol. I und II, Martinus Nijhoff Publishers, Den Haag, 1983). Es handelt sich um Polymerisate auf der Basis von Styrol, Acrylnitril, konjugierten Dienen, wie Butadien, Isopren oder Chlorpren, nicht konjugierten Dienen, α-Olefinen, Vinylchlorid, Vinylidenfluorid, Vinylacetate, aliphatischen Estern der (Meth)Acrylsäure mit 1 bis 20 C-Atomen in der Alkoholkomponente o. ä. als Monomerbausteine.

Ein wesentliches, erfindungsgemäßes Merkmal ist es, daß der Kunststoff 0,1 bis 20 Mol-%, vorzugsweise 0,5 bis 15 Mol-%,—bezogen auf den Kunststoff—Carboxyl-, Amid-, Epoxi-, Amino- oder Hydroxylgruppen aufweist.

Monomere, die diese funktionellen Gruppen liefern, sind z.B. Fumarsäure, Maleinsäure bzw. sein Anhydrid, Acrylsäure, Methacrylsäure, Hydroxiethylacrylat, Butandiolmonoacrylat, Fumarsäure- bzw. Maleinsäuremonoalkylester mit 1 bis 20, vorzugsweise 4 bis 12 C-Atomen, in der Alkylgruppe.

Bei dem Kunststoff hendelt es sich um Homopolymerisate, Copolymerisate oder Blockcopolymerisate, die auch vom Kern/Schale-Typ sein können. Erfindungsgemäß weisen sie eine Glasübergangstemperature von ≤0°C, vorzugsweise ≤−20°C, auf. Im Falle von Polymerisaten des Kern/Schale-Typs bezieht sich diese Glasübergangstemperatur auf Polymerisate, die durch alleiniges Polymerisieren der die Schale bildenden Monomere erhalten würden. Die Glasübergangstemperatur der Polymerisate, welche den Kern bilden, ist unerheblich; er liegt in der Regel bei −80 bis 140°C (allgemeiner Bereich), vorzugsweise bei −60 bis 0°C (Bereich für "weich/weich"-Typen).

Der erfindungsgemäße Latex weist einen Feststoffgehalt von <50 Gew.-% vorzugsweise von 20 bis 48 Gew.-% und insbesondere von 30 bis 45 Gew.-% auf.

Als lineare, hochmolekulare Polyester kommen alle bekannten und üblichen infrage, wie Homopolyester, Copolyester, Blockcopolyester—insbesondere solche auf Basis der Terephthalsäure (Sorensen und Campbell, Preparative Methods of Polymer Chemistry, Interscience Publishers Inc., N.Y., 1961, Seiten 111—127; Kirk-Othmer, Encyclopedia of Chemical Technology, Vol. 18, John Wiley and Sons (1982)—Seite 549 bis 574; US—PS 2 465 319; US—PS 3 047 539).

Als Beispiele für die Polyester seien Poly(ethylenterephthalat), Poly(propylenterephthalat) und vorzugsweise Poly(butylenterephthalat) genannt.

Bis zu 15 Mol-% der Terephthalsäure im Polyester können durch an sich bekannte andere aromatische, cycloaliphatische oder aliphatische Dicarbonsäuren ersetzt werden. Beispiele geeigneter Dicarbonsäuren sind Isophthalsäure, Phthalsäure, Cyclohexan-1.4-dicarbonsäure, Adipinsäure, Azelainsäure, Decandicarbonsäur o. ä.

Bis zu 15 Mol-% des jeweiligen Alkandiols im Polyester können durch andere aliphatische oder cycloaliphatische Diole wie beispielsweise Ethylenglykol, Propandiol-(1.3), Butandiol-(1.4), Hexandiol-(1.6), Neopentylglykol, 1.4-Dimethylolcyclohexan, Dodecandiol-(1.12) o. ä. ersetzt sein.

Der für die Abmischung verwendete Polyester wird in üblicher Weise durch Um- oder Veresterung und anschließende Polykondensation von Terephthalsäure oder deren polyesterbildenden Derivaten und Butandiol-(1.4) in Gegenwart von Katalysatoren hergestellt (Sorensen und Campbell, Preparative Methods of Polymer Chemistry, Interscience Publishers Inc., N.Y., 1961, Seiten 111 bis 127; Kunststoff-Handbuch, Band VIII, C. Hanser Verlag München, 1973, bzw. Journal of Polymer Science, Part A 1, *4*, Seite 1851 bis 1859, 1966).

Die Polyester weisen eine Viskositätszahl (J) zwischen 50 und 250, vorzugsweise von 90 bis 150 cm³/g auf.

In der Formmasse beträgt der Latexanteil—gerechnet als Feststoff—im allgemeinen 1 bis 400 Gew.-Teile, bezogen auf 100 Gew.-Teile Polyester. Bevorzugt ist ein Anteil von 5 bis 100 Gew.-Teilen Latexfeststoffgehalt, besonders bevorzugt ist der Bereich von 10 bis 40 Gew.-Teilen.

Zur Herstellung der erfindungsgemäßen Formmassen wird der Polyester zuerst in einen Mischextruder oder in einem Beispritzextruder aufgeschmolzen, oder er wird direkt aus dem Polykondensationsreaktor in den Mischextruder eingeführt. Anstelle des Mischextruders können auch andere kontinuierlich fördernde Mischaggregate verwendet werden, die außer guter Mischwirkung auch eine effektive Entgasung der Schmelze ermöglichen. Der Latex wird mit einer geeigneten Pumpe, z.B. einer Kolbenmembran- oder einer Mohno-Pumpe in eine zweite Öffnung des Mischaggregats eingespeist.

Die Schmelzetemperatur des Polyesters bewegt sich während des Mischvorganges im Bereich von 150 bis 300°C, vorzugsweise von 200 bis 280°C. Vorzugsweise wird die Temperatur so gewählt, daß sie 10 bis 70°C, vorzugsweise 15 bis 40°C, oberhalb des Schmelzpunktes des Polyesters liegt.

Die Mischung erfolgt bei einem Druck von etwa 1 bis 100 bar.

Das Abscheiden der gesamten wäßrigen Phase erfolgt erst, nachdem der Latex durch die Mischzonen des Mischextruders in die Polyesterschmelze eingearbeitet worden ist, sowohl durch mechanisches Abpressen in nachgeschalteten Quetsch- bzw. Kompressionszonen mit Abscheideöffnungen als auch durch zusätzliche Entgasungszonen bzw. -öffnungen des gleichen Aggregates oder in einem nachgeschalteten Entgasungsextruder.

Die Formmasse wird strangextrudiert, gekühlt und granuliert. Das Abmischen als solches ist nicht Gegenstand der Erfindung. Es ist aus dem Stand der Technik (Adv. Polym. Techn. *3* (1983), Seite 41 ff; US—PS 3 742 093) bekannt.

Die erfindungsgemäßen Formmassen können jedem bekannten Festphasennachkondensationsverfahren unterworfen werden, wie es z.B. in DE—PSS 30 33 468, 30 33 469 beschrieben wird.

Die erfindungsgemäßen Formmassen können auch Polyester enthalten, die durch Abmischung verschiedener Polyester bzw. durch Abmischen eines Polyesters mit Polyamiden oder Polycarbonaten oder mit anderer thermoplastischen Polymerisaten, wie z.B. Polyethylen, Polypropylen, Polystyrol, Poly(methyl)methacrylat, oder Copolymeren davon, erhalten werden.

Übliche Zusatz- und Hilfsstoffe, wie Pigmente, Verarbeitungsmittel, Füll- und Verstärkungsstoffe, Hydrolyse- oder UV-Stabilisatoren, können sowohl während der Herstellung als auch in die fertigen Formmassen eingearbeitet werden.

Es ist überraschend, daß die Formmasse trotz der großen Wassermenge, die bei der Herstellung mit dem Latex in die Polyesterschmelze eingetragen wird, ein hervorragendes Kerbschlagniveau erreicht. Die Polyester haben gegenüber denen des Standes der Technik den Vorteil, daß Formmassen mit hohem Zähigkeitsniveau wirtschaftlicher herstellbar sind und zudem ungepfropfte Copolymere mit einer Erweichungstemperatur unter Raumtemperatur Verwendung finden können, die sonst nicht einsetzbar sind.

Die in der Beschreibung und den Beispielen angeführten Parameter wurden mittels der nachstehend genannten Meßmethoden bestimmt:

Die *Viskositätszahl (J)* des Poly(butylenterephthalats) wurde nach DIN 16 779, Teil 2, an Lösungen von 0,5 g Poly(butylenterephthalat) in 100 ml Phenol/o-Dichlorbenzol (50/50 Gew.-Teile) bei 25°C bestimmt.

Die *Kerbschlagzähigkeit (a$_K$)* der Formmassen wurde nach DIN 53 453 an bei 250°C gespritzten Normkleinstäben mit Rechteckkerbe gemessen.

Die Ermittlung der *Glasübergangstemperatur (Tg)* des Elastomers erfolgte mit einem Torsionspendel im Torsionsschwingungsversuch (DIN 53 445).

Die nicht erfindungsgemäßen Beispiele sind durch Buchstaben gekennzeichnet.

Beispiele

Beispiel 1

Ein wäßriger Latex auf Basis eines Kunststoffs aus Styrol, Butadien und Acrylsäure (Styrol/Butadien/Acrylsäure-Verhältnis: 27,5:70:2,5 Gew.-%; Gehalt an funktionellen Gruppen: 2,2 Mol-% Carboxylgruppen; Feststoffgehalt: 40 Gew.-%; Glasübergangstemperatur: −45°C) wird in das zweite Raster eines Labordoppelschneckenkneters (LEISTRITZ 30.34) mit gleichsinnig drehenden Schnecken mit einer Kolbenmembranpumpe eindosiert, während über das erste Raster des Kneters ein handelsübliches Homopoly(butylenterephthalat) (J=105 cm$^3$/g) (VESTODUR$^R$ 1000) eingebracht wird. Die Zugabe der Latexmenge geschieht in der Weise, daß in der fertigen Formmasse der Elastomeranteil 20 Gew.-% beträgt. Die Schmelzetemperatur liegt bei 250°C. In den Rastern 5 und 8 des insgesamt 10 Raster (33.5 D) langen Kneters wird die Schmelze unter Anlegen von Vakuum durch Abdampfen des Wassers entgast. Der Restwassergehalt der Schmelze an der Austragsdüse des Kneters beträgt 0,1 bis 0,15 Gew.-%. Die Schmelze wird im Wasserbad abgekühlt, stranggranuliert und getrocknet (Ausstoß: 5 kg/h). Das Granulat wird anschließend 24 Stunden lang bei 200°C, 40 mbar und bei einem Stickstoffstrom von 0,5 m$^3$/h in einem Taumeltrockner thermisch nachbehandelt. Das Granulat wird auf einer Schneckenspritzmaschine bei 250°C zu Normkleinstäben nach DIN 53 453 verspritzt und geprüft. Die Kerbschlagzähigkeitswerte sind in der Tabelle angegeben.

Beispiel 2

Zur Herstellung der Formmasse wird ein Polyester gemäß Beispiel 1 eingesetzt und verarbeitet. Als Latex wird ein Poly(butylacrylat) mit einem Anteil an Maleinsäuremonobutylester (Butylacrylat/Maleinsäureester-Verhältnis: 93,3:6,7 Gew.-%; Gehalt an funktionellen Gruppen: 5 Mol-% Carboxylgruppen; Feststoffgehalt: 35 Gew.-%; Glasübergangstemperatur: −43°C) verwendet.

Die Nachkondensation und Aufarbeitung der Formmasse zu Normkleinstäben erfolgt analog Beispiel 1.

Beispiel 3

Ein handelsüblicher Latex auf Basis eines Kunststoffs aus Butadien, Acrylnitril und Methacrylsäure (Butadien/Acrylnitril/Methacrylsäure-Verhältnis: 65:30,5:4,5 Gew.-%; Gehalt an funktionellen Gruppen: 2,9 Mol-% Carboxylgruppen; Feststoffgehalt: ca. 45 Gew.-%; Glasübergangstemperatur: −23°C) (PERBUNAN$^R$ N-Latex VT) wird entsprechend den Maßnahmen des Beispiels 1 mit dem dort angeführten Polyester zu einer Formmasse verarbeitet.

Die Nachkondensation und Aufarbeitung zu Normkleinstäben erfolgt analog Beispiel 1.

Beispiel 4

Es wird ein Latex aus 9,3 Gew.-% Butylacrylat, 0,7 Gew-% Maleinsäuremono-n-butylester und 90 Gew.-% Butadien durch Emulsionspolymerisation eingesetzt, der so hergestellt wurde, daß in der ersten Stufe das Butadien polymerisiert wurde (Kern) und als zweite Stufe (Schale) die Mischung aus Butylacrylat und Maleinsäuremono-n-butylester aufpolymerisiert wurde. Der Kern hat eine Glasübergangstemperatur von ca. −80°C und die Schale eine Glasübergangstemperatur von ca. −43°C. Die Schale des Latex enthält 5 Mol-% Estergruppen und 5 Mol-% Carboxylgruppen. Der Feststoffgehalt beträgt 28 Gew.-%.

Der Latex wird entsprechend den Maßnahmen des Beispiels 1 mit dem dort angeführten Polyester zu einer Formmasse verarbeitet. Die Nachkondensation und Aufarbeitung zu Normkleinstäben erfolgt analog Beispiel 1.

Beispiel A

Der in Biespiel 4 beschriebene Latex (Feststoffgehalt 28 Gew.-%) wird entsprechend der Arbeitsvorschrift von EP-PS 56 123 ausgefällt und mechanisch bis auf einen Gehalt von 35 Gew.-% Wasser (Feststoffgehalt 65 Gew.-%) entwässert. Dabei koaguliert das als wäßriger Latex vorliegende Pfropfpolymerisat. Bei dem Versuch, diese teilentwässerte Latexdispersion entsprechend den Maßnahmen des Beispiels 1 mit dem dort aufgeführten Polyester zu einer Formmasse zu verarbeiten, verstopfen die zur Dosierung des Latex eingesetzten Aggregate.

## EP 0 191 164 B1

### TABELLE

| Beispiel | Viskositätszahl (J) des Polyesters in der Formmasse [cm³/g] | Kerbschlagzähigkeit [kJ/m²] | | | |
|---|---|---|---|---|---|
| | | 23°C | 0°C | −20°C | −40°C |
| 1 | 115 | k.B.*) | 27 | 20 | 12 |
| 2 | 112 | k.B.*) | 25 | 14 | 7 |
| 3 | 105 | k.B.*) | 17 | 9 | 3 |
| 4 | 108 | k.B.*) | 20 | 12 | 8 |
| A | — | — | — | — | — |

\*) k.B.: kein Bruch

## Patentansprüche

1. Formmasse auf der Basis eines linearen, hochmolekularen Polyesters mit einer Viskositätszahl im Bereich von 50 bis 250 cm³/g, dem bei Temperaturen im Bereich von 150 bis 300°C, unter einem Druck von 1 bis 100 bar und unter Einwirkung von starken Scherkräften mindestens ein weiterer, als wäßriger Latex vorliegender Kunststoff auf der Basis von α-Olefinen, konjugierten bzw. nicht konjugierten Dienen, Styrol, Acrylnitril, Vinylchlorid, Vinylacetat, Vinylidenfluorid, aliphatischen Estern der (Meth)acrylsäure mit 1 bis 20 C-Atomen in der Alkoholkomponente zugemischt wird, wobei der Latex einen Feststoffgehalt von <50 Gew.-% bezitzt und daß der in dem Latex vorliegende Kunststoff ein Homo-, Co- oder ein Blockcopolymerisat mit einer Glasübergangstemperatur von ≤0°C oder ein Polymerisat vom Kern-Schale-Typ ist, wobei die zum Aufbau der Schale eingesetzten Monomeren für sich polymerisiert gleichfalls eine Glasübergangstemperatur von ≤0°C aufweisen, und daß der in dem Latex vorliegende Kunststoff 0,1 bis 20 Mol-%—bezogen auf den Kunststoff—Carboxyl-, Amid-, Epoxi-, Amino- oder Hydroxylgruppen aufweist.

2. Formmasse gemäß Anspruch 1, dadurch gekennzeichnet, daß der zugemischte Latex einen Feststoffgehalt von 20 bis 48 Gew.-% besitzt.

3. Formmasse gemäß Anspruch 1 und 2, dadurch gekennzeichnet, daß der in dem Latex enthaltene Kunststoff—entsprechend der Definition in Anspruch 1—eine Glasübergangstemperatur von ≤−20°C aufweist.

4. Formmasse gemäß den Ansprüchen 1 bis 3, dadurch gekennzeichnet, daß der in dem Latex enthaltene Kunststoff 0,5 bis 15 Mol-%—bezogen auf den Kunststoff—funktionelle Gruppen enthält.

## Revendications

1. Masse à mouler à base d'un polyester linéaire de poids moléculaire élevé présentant un indice de viscosité compris dans un domaine de 50 à 250 cm³ par gramme, auquel on a mélangé, à des températures comprises dans un domaine de 150 à 300°C, sous une pression de un à 100 bars et en faisant agir de fortes forces de cisaillement, au moins une autre substance synthétique se présentant à l'état de latex aqueux, à base d'alpha-oléfines, de diènes conjugués ou non-conjugués, de styrène, d'acrylonitrile, de chlorure de vinyle, d'acétate de vinyle, de fluorure de vinylidène, d'esters aliphatiques de l'acide (méth)acrylique comportant de un à 20 atomes de carbone dans le composant alcoolique, tandis que le latex possède une teneur en substance solide inférieure à 50% en poids et que la substance synthétique présente dans le latex est un produit d'homopolymérisation, de copolymérisation ou de copolymérisation en bloc avec une température de transition vitreuse inférieure ou égale à 0°C, ou bien un produit de polymérisation du type noyau-enveloppe, tandis que les monomères utilisés pour l'édificiation de la enveloppe, polymérisés en eux-mêmes, présentent également une température de transition vitreuse inférieure ou égale à 0°C, et que la substance synthétique présente dans le latex possède de 0,1 à 20 mole-%, relativement à la substance synthétique, de groupes carboxyle, amide, époxy, amine ou hydroxyle.

2. Masse à mouler selon la revendication 1, caractérisée par le fait que le latex ajouté présente une teneur en substance solide de 20 à 48% en poids.

3. Masse à mouler selon les revendications 1 et 2, caractérisée par le fait que la substance synthétique contenue dans le latex, en correspondance avec la définition donnée dans la revendication 1, présente une température de transition vitreuse inférieure ou égale à −20°C.

4. Masse à mouler selon les revendications 1 à 3, caractérisée par le fait que la substance synthétique contenue dans le latex renferme, relativement à la substance synthétique, de 0,5 à 15 mole-% de groupes fonctionnels.

5

**Claims**

1. A moulding composition based on a linear, high-molecular-weight polyester having a viscosity index in the range from 50 to 250 cm³/g, to which at least one further plastic based on α-olefins, conjugated or non-conjugated dienes, styrene, acrylonitrile, vinyl chloride, vinyl acetate, vinylidene fluoride, or aliphatic esters of (meth)acrylic acid having 1 to 20°C atoms in the alcohol component is admixed in the form of an aqueous latex at a temperature in the range from 150 to 300°C, under a pressure of from 1 to 100 bar and under the action of strong shear forces, the latex having a solids content of <50% by weight, and the plastic present in the latex is a homopolymer, copolymer or block copolymer having a glass transition temperature of ≤0°C or is a polymer of the core/shell type, the monomers employed for building up the shell, when polymerised alone, likewise have a glass transition temperature of ≤0°C, and the plastic present in the latex contains 0.1 to 20 mol-%—relative to the plastic—of carboxyl, amide, epoxy, amino or hydroxyl groups.

2. A moulding composition according to claim 1, characterized in that the admixed latex has a solids content of from 20 to 48% by weight.

3. A moulding composition according to claim 1 or 2, characterized in that the plastic present in the latex—in accordance with the definition in claim 1—has a glass transition temperature of ≤−20°C.

4. A moulding composition according to any of claims 1 to 3, characterized in that the plastic present in the latex contains 0.5 to 15 mol-%—relative to the plastic—of functional groups.